# EUROPÄISCHE PATENTSCHRIFT

(11) **EP 2 987 066 B1**
(45) Veröffentlichungstag und Bekanntmachung des Hinweises auf die Patenterteilung: **26.02.2020**
(21) Anmeldenummer: 14717454.4
(22) Anmeldetag: 14.04.2014
(51) Int. Cl.: G06F 3/0481, B60K 37/00, B60K 35/00, B60K 37/06

(54) **KRAFTFAHRZEUG MIT EINER ANZEIGE- UND BEDIENVORRICHTUNG UND ENTSPRECHENDES VERFAHREN**
MOTOR VEHICLE HAVING A DISPLAY AND OPERATING DEVICE AND CORRESPONDING METHOD
VÉHICULE À MOTEUR ÉQUIPÉ D'UN DISPOSITIF D'AFFICHAGE ET DE COMMANDE, ET PROCÉDÉ CORRESPONDANT

(30) Priorität: 18.04.2013 DE 102013207018
(43) Veröffentlichungstag der Anmeldung: 24.02.2016
(73) Patentinhaber: Bayerische Motoren Werke Aktiengesellschaft, 80809 München (DE)
(72) Erfinder: NIEMANN, Julia, 80796 München (DE); BROY, Nora, 81539 München (DE); LAUBER, Felix, 80634 München (DE)
(86) Internationale Anmeldenummer: PCT/EP2014/057539
(87) Internationale Veröffentlichungsnummer: WO 2014/170277

(56) Entgegenhaltungen:
- EP-A2- 2 400 367
- EP-A2- 2 525 282
- EP-A2- 2 567 869
- US-A1- 2009 158 167

## Beschreibung

Die Erfindung betrifft ein Kraftfahrzeug mit einer Anzeige- und Bedienvorrichtung, welche umfasst: eine Anzeigeeinrichtung zum Anzeigen von auswählbaren graphischen Objekten, eine Eingabeeinrichtung zum Empfangen von Eingaben eines Benutzers, über die eines der angezeigten Objekte auswählbar ist, und eine elektronische Steuereinrichtung, welche zum Ansteuern der Anzeigeeinrichtung abhängig von den empfangenen Eingaben ausgebildet ist. Die Erfindung betrifft außerdem ein Verfahren zum Betreiben einer Anzeige- und Bedienvorrichtung in einem Kraftfahrzeug.

Anzeige- und Bedienvorrichtungen für Kraftfahrzeuge sind bereits aus dem Stand der Technik in vielfältiger Ausgestaltung bekannt. So werden beispielsweise Touch-Displays eingesetzt, welche einerseits zur optischen Anzeige von Informationen dienen und andererseits auch als Eingabeeinrichtungen fungieren, welche zum Empfangen von Eingaben eines Benutzers ausgebildet sind. Auf einem solchen Touch-Display können bekanntlich eine Vielzahl von Menüeinträgen bzw. Menüobjekten angezeigt werden, welche durch den Benutzer einzeln ausgewählt werden können, um beispielsweise zu einem Untermenü gelangen zu können oder aber eine bestimmte Anwendung zu aktivieren. Dazu braucht die Bedienperson lediglich das Display an der Stelle des angezeigten Menüobjekts zu berühren, und die Anzeige wechselt dann direkt zu dem ausgewählten Untermenü bzw. zu der ausgewählten Anwendung.

An den aus dem Stand der Technik bekannten Anzeige- und Bedienvorrichtungen ist als nachteilig der Umstand anzusehen, dass das angezeigte Menü, bei welchem eine Vielzahl von auswählbaren Objekten bzw. Menüeinträgen dargestellt werden, üblicherweise unübersichtlich gestaltet wird. Es werden nämlich in der Regel komplexe hierarchische Menüstrukturen verwendet, deren Inhalte fest vorgegeben sind. Es ist somit relativ schwierig und aufwändig für den Benutzer, sich einen Überblick über die vorhandenen, zur Verfügung stehenden Objekte zu verschaffen. Diese können in der Regel auch nicht auf den ersten Blick durch den Benutzer wahrgenommen bzw. erfasst werden, sodass es üblicherweise relativ lange dauert, bis der Benutzer das gewünschte Objekt bei der Vielzahl von angezeigten Objekten findet. Wird die Anzeige- und Bedienvorrichtung von dem Fahrer des Kraftfahrzeugs selbst bedient, so kann es somit zu einer Ablenkung von der aktuellen Straßensituation kommen.

Die DE 199 41 951 A1 beschreibt eine Anzeigeeinheit für eine Klimaanlage eines Kraftfahrzeugs, bei welcher ein multifunktionaler Bildschirm eingesetzt wird. Es sind hier erste Bedienelemente sowie davon separate zweite Bedienelemente bereitgestellt. Den separaten zweiten Bedienelementen ist eine erhöhte Priorität zugeordnet, sodass die diesen Bedienelementen zugeordneten Bedienfunktionen vorrangig ausgeführt werden. Dadurch kann der Benutzer, ohne ein aufgerufenes Menü - beispielsweise für die Navigation - zu verlassen, schnell und einfach Änderungen an der Klimaanlage vornehmen.

Aus der DE 100 44 892 A1 ist ein Verfahren zum Betreiben einer multifunktionalen Anzeigeeinrichtung in einem Kraftfahrzeug bekannt. Um zu erreichen, dass diese multifunktionale Anzeigeeinrichtung effektiver genutzt werden kann, werden die Dateninhalte oder Meldungen unterschiedlicher Funktionsgeräte des Kraftfahrzeugs in einem Steuergerät abgespeichert. Einer aktuell gewählten Anzeige wird ein Prioritätswert zugeordnet, welcher zyklisch an das Steuergerät zurückgesendet wird, sodass erst dann wieder ein anderer Dateninhalt angezeigt wird, wenn er gesondert angewählt oder einen höheren Prioritätswert hat.

Das Dokument US 2009/0158167 A1 offenbart ein Verfahren zum Anpassen eines Menüs einer elektronischen Vorrichtung. Dabei werden die Größen der Menüoptionen anhand der Benutzungsfrequenz eingestellt.

Das Dokument EP 2 525 282 A2 offenbart ein Verfahren zum Anordnen von Icons auf einer Anzeige eines elektronischen Gerätes.

Das Dokument EP 2 400 367 A2 offenbart eine Vorrichtung zur Verarbeitung von dreidimensionalen Daten. Dabei wird das Objekt, das ein Ereignis mit der höchsten Priorität repräsentiert, an der höchsten bzw. nächsten Position angezeigt.

Es ist Aufgabe der Erfindung, eine Lösung aufzuzeigen, wie bei einem Kraftfahrzeug mit einer Anzeige- und Bedienvorrichtung der eingangs genannten Gattung die auf der Anzeigeeinrichtung bereitgestellte Anzeige im Vergleich zum Stand der Technik benutzerfreundlicher gestaltet werden kann.

Diese Aufgabe wird erfindungsgemäß durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Kraftfahrzeug, insbesondere Personenkraftwagen, umfasst eine in dem Kraftfahrzeug - insbesondere unlösbar - installierte Anzeige- und Bedienvorrichtung. Die Anzeige- und Bedienvorrichtung umfasst eine optische Anzeigeeinrichtung zum Anzeigen von auswählbaren graphischen Objekten sowie eine Eingabeeinrichtung zum Empfangen von Eingaben eines Benutzers, über welche eines der angezeigten Objekte ausgewählt werden kann. Die Anzeige- und Bedienvorrichtung umfasst des Weiteren eine Steuereinrichtung, welche zum Ansteuern der Anzeigeeinrichtung abhängig von den empfangenen Eingaben ausgebildet ist. Die Steuereinrichtung ist dazu ausgelegt, abhängig von den empfangenen Eingaben eine Größe der einzelnen angezeigten Objekte und/oder eine Anordnung der angezeigten Objekte untereinander im Betrieb der Anzeige- und Bedienvorrichtung einzustellen. Es ist vorgesehen, dass mittels der Steuereinrichtung den angezeigten Objekten jeweils ein Prioritätswert abhängig von den Eingaben zugeordnet wird. Dann kann die Größe der jeweiligen Objekte und/oder die Anordnung der angezeigten Objekte untereinander in Abhängigkeit von den Prioritätswerten der Objekte eingestellt werden.

Hierdurch wird erreicht, dass die optische Anzeige auf der Anzeigeeinrichtung quasi individuell für jeden Benutzer gestaltet werden kann, nämlich insbesondere abhängig von den jeweiligen Anforderungen des Benutzers bzw. abhängig von dem Bedienverhalten des jeweiligen Benutzers. So können beispielsweise diejenigen Objekte größer und/oder an einer zentralen Stelle der Anzeigeeinrichtung angezeigt werden, welche im Vergleich zu anderen Objekten häufiger ausgewählt werden. Die graphischen Objekte können priorisiert werden, und die Verteilung bzw. Anordnung der graphischen Objekte kann an persönliche Bedienpräferenzen des Benutzers angepasst und individualisiert werden. Im Betrieb der Anzeige- und Bedienvorrichtung können die Prioritätswerte einzeln inkrementiert werden. Durch die Zuordnung der Prioritätswerte zu den einzelnen Objekten kann die Einstellung der Größe und/oder der Anordnung der Objekte im Betrieb der Anzeige- und Bedienvorrichtung auch ohne viel Aufwand implementiert werden. Außerdem ist somit eine besonders präzise und adaptive Priorisierung der einzelnen Objekte möglich.

Die Einstellung der Größe der einzelnen graphischen Objekte und/oder die Einstellung der Anordnung der Objekte untereinander kann insbesondere auch ohne eine Änderung der Anzahl der angezeigten Objekte und somit ohne eine Hinzufügung eines zusätzlichen Objekts und ohne Löschung eines der angezeigten Objekte erfolgen. Dies kann beispielsweise so vorgenommen werden, dass eines der angezeigten Objekte - beispielsweise aufgrund einer häufigen Auswahl dieses Objekts - vergrößert angezeigt wird, während ein weniger häufig ausgewähltes Objekt verkleinert werden kann.

Unter einem graphischen Objekt wird vorliegend insbesondere ein Menüeintrag bzw. ein Menüsymbol verstanden, welcher bzw. welches eine diesem Objekt zugeordnete Applikation repräsentiert, sodass nach Auswahl des Objekts diese zugeordnete Applikation aktiviert und eine graphische Benutzeroberfläche dieser Applikation angezeigt wird. Die Objekte können beispielsweise jeweils einem Funktionsgerät des Kraftfahrzeugs zugeordnet sein, wie beispielsweise einer Telefonanlage, einem Navigationssystem, einem Bordcomputer, einer Audioanlage, einem Radiogerät, einer Kommunikationseinrichtung zur Kommunikation mit einem Internetserver und dergleichen. Nach Auswahl eines der graphischen Objekte kann dann das jeweils zugeordnete Funktionsgerät genutzt bzw. gesteuert werden.

Die graphischen Objekte können auch Informationsobjekte einerseits, welche Applikationen zugeordnet sind, die ausschließlich zur Darstellung bzw. zur Ausgabe von - beispielsweise Internet-basierten - Informationen dienen, sowie Anwendungsobjekte andererseits beinhalten, welche Applikationen zugeordnet sind, welche in Interaktion mit dem Benutzer ablaufen. Die Informationsobjekte können beispielsweise ein Objekt umfassen, mittels welchem die aktuelle Uhrzeit dargestellt wird. Als weiteres Beispiel eines Informationsobjekts sei an dieser Stelle ein graphisches Objekt genannt, welches die aktuelle Wetterlage und/oder eine Wettervorhersage graphisch repräsentiert. Außerdem können die Informationsobjekte auch Objekte beinhalten, die speziell fahrzeugbezogene Informationen darstellen, wie beispielsweise den aktuellen Wert eines Betriebsparameters des Kraftfahrzeugs, nämlich insbesondere die aktuelle Motortemperatur und/oder den aktuellen Tankfüllstand. Demgegenüber können die Anwendungsobjekte beispielsweise ein Objekt beinhalten, nach dessen Auswahl ein Navigationssystem des Kraftfahrzeugs gesteuert bzw. bedient werden kann. Die Anwendungsobjekte können aber auch Internet-basierte Objekte beinhalten, wie beispielsweise ein Objekt, nach dessen Auswahl eine Suchmaschine aktiviert wird.

Bei der Gruppe der angezeigten graphischen Objekte kann es sich auch um ein Menü handeln, sodass nach Auswahl eines der Objekte ein untergeordnetes Menü mit anderen graphischen Objekten angezeigt wird.

Wird im Betrieb der Anzeige- und Bedienvorrichtung eines der angezeigten Objekte durch den Benutzer ausgewählt, so kann die Steuereinrichtung nach Auswahl dieses Objekts selbiges Objekt fortlaufend und insbesondere auch stetig und somit sprungfrei vergrößern, bis das ausgewählte Objekt zumindest einen überwiegenden Flächenbereich der Anzeigefläche der Anzeigeeinrichtung einnimmt. Dies bedeutet, dass nach Auswahl eines bestimmten Objekts quasi ein Einzoomen auf dieses Objekt durchgeführt wird, sodass dieses Objekt kontinuierlich auf der Anzeigeeinrichtung vergrößert wird. Das ausgewählte Objekt wird dabei vorzugsweise in einen Mittelpunkt auf der Anzeigeeinrichtung bewegt.

Das Einzoomen auf das ausgewählte Objekt erweist sich insbesondere dann als vorteilhaft, wenn die graphischen Objekte jeweils durch eine graphische Benutzeroberfläche einer dem jeweiligen Objekt zugeordneten Applikation bzw. Anwendung gebildet sind. Jedes Objekt gibt also die graphische Benutzeroberfläche der diesem Objekt zugeordneten Applikation wieder. Wird eines der Objekte bzw. die zugeordnete Applikation durch den Benutzer ausgewählt, so erfolgt vorzugsweise eine Änderung der Skalierung des ausgewählten Objekts von einem ersten Skalengrad, bei welchem die graphische Benutzeroberfläche nur grob erkannt werden kann, zu einem zweiten Skalengrad, bei welchem das ausgewählte Objekt so groß dargestellt wird, dass die in ihm verkörperte graphische Benutzeroberfläche der ausgewählten Applikation im Detail erkannt und die gegebenenfalls bei dieser graphischen Benutzeroberfläche vorhandenen Eingabefelder und/oder ein weiteres Untermenü genutzt werden können. Ein weiterer Vorteil ergibt sich, wenn bei der Überblicksdarstellung dem Nutzer - wenn auch recht klein - eine Vorschau darüber gegeben wird, welche Funktionalitäten in der Applikation enthalten sind.

Zum Auswählen eines der angezeigten Objekte kann die Eingabeeinrichtung eine Spracheingabeeinheit umfassen, welche zum Empfangen von Sprachbefehlen des Benutzers ausgebildet ist, sodass die auf der Anzeigeeinrichtung angezeigten Objekte mittels Spracheingabe auswählbar sind. Die Steuereinrichtung kann dann dazu ausgelegt sein, einen empfangenen Sprachbefehl einer Sprachbefehlserkennung hinsichtlich einer Vielzahl von abgelegten, vorgegebenen Sprachbefehlen zu unterziehen und nach Erkennen eines vorgegebenen Sprachbefehls das diesem Sprachbefehl zugeordnete Objekt auszuwählen. Ergänzend weist die Eingabeeinrichtung auch zumindest eine berührungssensitive Oberfläche auf, sodass die Auswahl der Objekte durch Berühren der berührungssensitiven Oberfläche vorgenommen werden kann.

Es erweist sich als besonders vorteilhaft, wenn die Steuereinrichtung zu den einzelnen Objekten jeweils eine Häufigkeit der Auswahl des jeweiligen Objekts durch den Benutzer bestimmt und die Prioritätswerte in Abhängigkeit von der jeweiligen Häufigkeit der Auswahl bestimmt. Somit kann beispielsweise ein relativ großer Prioritätswert demjenigen Objekt zugeordnet werden, welches im Vergleich zu den anderen Objekten häufiger durch den Benutzer ausgewählt wird. Entsprechend kann dasjenige Objekt den kleinsten Prioritätswert aufweisen, welches im Vergleich zu anderen Objekten am seltensten ausgewählt wird. Somit wird auf einfache Art und Weise eine Verknüpfung zwischen den Prioritätswerten und somit der Größe und/oder Anordnung der einzelnen Objekte einerseits und den Bedienpräferenzen des Benutzers andererseits geschaffen.

Es kann vorgesehen sein, dass zu den Objekten jeweils ein Zählerwert als Prioritätswert definiert wird und die Steuereinrichtung dazu ausgelegt ist, bei jeder Auswahl eines der Objekte durch den Benutzer den diesem Objekt zugeordneten Zählerwert zu erhöhen, also beispielsweise zu inkrementieren. Zu jedem Objekt kann somit gezählt werden, wie viel Mal dieses Objekt durch den Benutzer ausgewählt wird. Die Priorisierung der graphischen Objekte kann somit ohne viel Aufwand implementiert werden und entspricht außerdem den tatsächlichen Bediengewohnheiten des Benutzers.

Die Priorisierung der Objekte kann beispielsweise so aussehen, dass das Objekt mit dem höchsten Prioritätswert auf der Anzeigeeinrichtung größer als alle anderen Objekte angezeigt wird. Hier liegt der Vorteil darin, dass die relative Position der Objekte zueinander sowie die semantische Struktur der Objekte zueinander erhalten bleiben. Trotz den adaptiven Systemanpassungen weiß der Nutzer noch ganz genau, an welcher Stelle sich alle Objekte befinden. Ergänzend oder alternativ kann das Objekt mit dem höchsten Prioritätswert in einem zentralen Bereich auf der Anzeigeeinrichtung angezeigt werden, d.h. etwa mittig bzw. im Zentrum der Anzeigeeinrichtung. Beide Ausführungsformen sorgen dafür, dass das Objekt mit der höchsten Priorität durch den Benutzer einfacher und schneller wahrgenommen werden kann, ohne dass der Benutzer in aufwändiger Weise nach seinen beliebten Objekten auf der Anzeigeeinrichtung suchen muss. Wird die Anzeige- und Bedienvorrichtung von einem Fahrer des Kraftfahrzeugs bedient, so kann dadurch eine Ablenkung des Fahrers von der aktuellen Straßensituation verhindert werden, und der Fahrer kann sich weiterhin auf die jeweils augenblickliche Verkehrssituation konzentrieren und gleichzeitig auch die Anzeige- und Bedienvorrichtung bedienen.

In einer Ausführungsform ist vorgesehen, dass die Anzeige- und Bedienvorrichtung eine Blickerkennungseinrichtung aufweist, welche zum Erfassen einer Blickrichtung des Benutzers ausgebildet ist. Die Steuereinrichtung kann dann zu den einzelnen Objekten jeweils eine Häufigkeit bestimmen, mit welcher der Benutzer seinen Blick auf das jeweilige Objekt richtet. Die Steuereinrichtung kann die Prioritätswerte in Abhängigkeit von der jeweiligen Häufigkeit bestimmen. Beispielsweise kann dies auch so aussehen, dass der Prioritätswert eines Objekts immer dann erhöht wird, wenn der Benutzer seinen Blick häufig auf dieses Objekt richtet. Diese Erhöhung kann jedoch eine geringere Erhöhung als die durch die Auswahl des Objekts selbst bewirkte Erhöhung sein, sodass eine Gewichtung zwischen der Häufigkeit der Auswahl einerseits und der Häufigkeit andererseits verwendet wird, mit welcher der Benutzer den Blick auf das Objekt richtet. Mithilfe einer derartigen Blickrichtungserkennung können die Bedienpräferenzen des Benutzers noch präziser und höchst genau ermittelt werden, sodass die adaptive Anpassung der Größe und/oder der Anordnung der graphischen Objekte noch zuverlässiger und genauer vorgenommen werden kann.

Die Anzeigeeinrichtung kann beispielsweise an einer Instrumententafel angeordnet sein, insbesondere an einer Mittelkonsole oder aber in einem Kombiinstrument.

Prinzipiell kann die Anzeigeeinrichtung als herkömmliches zweidimensionales Display - beispielsweise ein LCD-Display - ausgebildet sein. Insbesondere in Verbindung mit der Priorisierung der graphischen Objekte erweist es sich jedoch als vorteilhaft, wenn die Anzeigeeinrichtung als dreidimensionale Anzeigeeinrichtung ausgebildet ist, welche dazu ausgelegt ist, die graphischen Objekte als dreidimensionale Objekte bzw. dreidimensionale Körper anzuzeigen. Eine solche dreidimensionale Anzeigeeinrichtung kann zum einen in Form eines dreidimensionalen Projektors ausgebildet sein, der zum Projizieren der dreidimensionalen Objekte in einen dreidimensionalen Anzeigeraum ausgebildet ist. Ein derartiger Raumbildprojektor kann beispielsweise als holographischer Projektor oder ein Volumen-Display ausgebildet sein. Zum anderen kann jedoch alternativ eine dreidimensionale Anzeigeeinrichtung eingesetzt werden, die eine räumliche Tiefe ausschließlich durch verschiedenste visuelle Effekte vortäuschen kann. Beispielsweise kann dabei ein stereoskopisches Display eingesetzt werden.

Wird eine derartige dreidimensionale Anzeigeeinrichtung eingesetzt, so kann die Steuereinrichtung dazu ausgelegt sein, die Position der Objekte in Tiefenrichtung der Anzeigeeinrichtung und somit in Richtung senkrecht zu einer Anzeigefläche der Anzeigeeinrichtung abhängig von dem jeweiligen Prioritätswert einzustellen. Beispielsweise können diejenigen Objekte, die häufiger als andere Objekte ausgewählt werden bzw. einen höheren Prioritätswert aufweisen, in Tiefenrichtung der Anzeigeeinrichtung weniger tief als andere Objekte dargestellt werden. Entsprechend können Objekte mit relativ geringen Prioritätswerten in Tiefenrichtung der Anzeigeeinrichtung tiefer als andere Objekte angezeigt werden, sodass diese quasi hinter den "wichtigeren" Objekten liegen. Es kann hier optional auch vorgesehen sein, dass die relative Position aller Objekte zueinander in Quer- und Längsrichtung der Anzeigeeinrichtung erhalten und somit konstant bleibt und/oder die Größe aller Objekte jeweils unverändert gehalten werden kann. Trotz den adaptiven Systemanpassungen weiß der Nutzer somit ganz genau, wo sich die jeweiligen Objekte befinden. Somit kann die optische Anzeige auf der Anzeigeeinrichtung besonders benutzerfreundlich und bedarfsgerecht gestaltet werden.

Die Steuereinrichtung kann zu zumindest einem Objektpaar aus einem ersten Objekt und einem zweiten Objekt eine Häufigkeit der Auswahl dieser Objekte unmittelbar nacheinander bestimmen und abhängig von dieser Häufigkeit einen Abstand zwischen dem ersten und dem zweiten Objekt auf der Anzeigeeinrichtung einstellen. Dies bedeutet insbesondere, dass zu dem zumindest einen Objektpaar eine Anzahl von Auswahlvorgängen bestimmt werden kann, bei denen das erste und das zweite Objekt unmittelbar nacheinander durch den Benutzer ausgewählt werden. Werden diese beiden Objekte relativ häufig nacheinander ausgewählt, so kann der Abstand zwischen diesen Objekten auf der Anzeigeeinrichtung relativ klein eingestellt werden, sodass ausgehend von dem ersten Objekt der Benutzer nicht in aufwändiger Weise nach dem zweiten Objekt suchen muss. Eine solche Häufigkeit, mit welcher zwei Objekte nacheinander ausgewählt werden, kann auch für jedes mögliche Objektpaar bestimmt werden, sodass insgesamt eine Häufigkeitsmatrix definiert wird, welche für jedes mögliche Objektpaar die jeweilige Häufigkeit der Auswahl der Objekte unmittelbar nacheinander angibt. Die Abstände zwischen den jeweils zwei Objekten eines jeden Objektpaares können dann anhand der Häufigkeitsmatrix eingestellt werden. Die adaptive Einstellung der räumlichen Anordnung der Objekte untereinander kann somit ohne viel Aufwand unter Verwendung der Häufigkeitsmatrix implementiert werden.

Erfindungsgemäß erfolgt die Einstellung der Größe und/oder der Anordnung der Objekte adaptiv bzw. automatisch mittels der Steuereinrichtung, nämlich insbesondere abhängig von den bisherigen Eingaben des Benutzers und somit insbesondere abhängig von einer Häufigkeit der Auswahl der einzelnen graphischen Objekte. Hier wird die Anordnung und/oder Größe der Objekte adaptiv mittels der Steuereinrichtung an die Bedienpräferenzen und die Bedienhistorie des jeweiligen Benutzers angepasst. Optional kann dazu auch vorgesehen sein, dass der Benutzer selbst Eingaben an der Eingabeeinrichtung vornehmen kann, sodass über diese Eingaben unmittelbar die Größe und/oder die Anordnung der Objekte benutzerdefiniert eingestellt wird. Dies kann so implementiert werden, dass die Größe und/oder die Anordnung der Objekte so lange automatisch bzw. adaptiv mittels der Steuereinrichtung anhand der Prioritätswerte eingestellt wird, bis der Benutzer die Größe und/oder die Anordnung selbst definiert. Nach einer benutzerdefinierten Einstellung der Größe und/oder der Anordnung kann die automatische Einstellung unterbleiben. Diese kann beispielsweise wieder dann durchgeführt werden, wenn ein anderer Benutzer - beispielsweise ein anderer Fahrerdetektiert wird.

Es ist also auch möglich, dass sich der Benutzer die Größe und/oder die Anordnung der angezeigten Objekte untereinander - insbesondere auch in Tiefenrichtung der Anzeigeeinrichtung - selbst definiert und die Gestaltung der optischen Anzeige somit selbst bestimmt. Ingesamt wird somit eine besonders benutzerfreundliche Anzeige- und Bedienvorrichtung geschaffen, welche von jedem Benutzer sehr einfach und intuitiv bedient werden kann.

Demnach kann die Größe der einzelnen angezeigten Objekte und/oder die Anordnung der angezeigten Objekte untereinander auch durch den Benutzer selbst definiert werden. Dazu kann die Anzeige- und Bedienvorrichtung einen speziellen Konfigurationsmodus aufweisen, in welchem mittels der Eingabeeinrichtung die Größe der einzelnen angezeigten Objekte und/oder die Anordnung der Objekte untereinander benutzerdefiniert eingestellt werden kann. Auf diese Art und Weise kann sich der Benutzer selbst ein für ihn optimales Menü gestalten und hierbei die Größe der einzelnen Objekte und/oder die Position der Objekte untereinander bestimmen. Somit kann eine sehr einfache und intuitive Bedienung ermöglicht werden, weil der Benutzer seine eigene Menüstruktur sofort auf einen Blick erfassen kann.

Der Betrieb der Anzeige- und Bedienvorrichtung kann also insgesamt einen Betriebsmodus und einen Konfigurationsmodus beinhalten.

Es kann auch vorgesehen sein, dass in dem Konfigurationsmodus die Objekte auf der Anzeigeeinrichtung durch Betätigen der Eingabeeinrichtung einzeln durch Ziehen und Ablegen (drag and drop) verschiebbar sind. Die Einstellung der jeweiligen Positionen der Objekte auf der Anzeigeeinrichtung kann somit besonders einfach durch den Benutzer vorgenommen werden, indem beispielsweise eine berührungssensitive Oberfläche der Anzeigeeinrichtung oder aber ein separates Bedienelement betätigt wird.

Weist die Anzeige- und Bedienvorrichtung einen Konfigurationsmodus auf, so kann in einem derartigen Modus auch vorgesehen sein, dass mittels der Eingabeeinrichtung die auf der Anzeigeeinrichtung anzuzeigenden Objekte aus einer Objektbibliothek, insbesondere durch Ziehen und Ablegen, ausgewählt werden können. Der Benutzer kann somit selbst die Objekte definieren, welche in dem angezeigten Menü auf der Anzeigeeinrichtung im Betrieb angezeigt werden sollen. Diese Objekte können in der genannten Objektbibliothek abgelegt sein, welche in dem Konfigurationsmodus auch auf der Anzeigeeinrichtung angezeigt werden kann, sodass sich der Benutzer die benötigten, im tatsächlichen Betriebsmodus dann anzuzeigenden Objekte auswählen kann.

Die Erfindung betrifft außerdem ein Kraftfahrzeug, insbesondere einen Personenkraftwagen, mit einer erfindungsgemäßen Anzeige- und Bedienvorrichtung.

Ein erfindungsgemäßes Verfahren dient zum Betreiben einer Anzeige- und Bedienvorrichtung eines Kraftfahrzeugs, wobei bei dem Verfahren mittels einer Anzeigeeinrichtung auswählbare graphische Objekte angezeigt werden, mittels einer Eingabeeinrichtung Eingaben eines Benutzers empfangen werden, über welche eines der angezeigten Objekte ausgewählt wird, und wobei mittels einer Steuereinrichtung die Anzeigeeinrichtung abhängig von den Eingaben angesteuert wird. Mittels der Steuereinrichtung wird abhängig von den empfangenen Eingaben eine Größe der einzelnen angezeigten Objekte und/oder eine Anordnung der angezeigten Objekte untereinander eingestellt.

Die ausgeführte Darstellung der Objekte im Raum zeigt eine besondere Eignung für neuartige Bedienmodalitäten, wie beispielsweise Blick- und/oder Gestenerkennung. Bei diesen Modalitäten wird nämlich ein relativ hoher Freiheitsgrad in alle Richtungen ermöglicht, welcher eine Anpassung der räumlichen Anordnung von Anwendungen im Raum begünstigt.

Die mit Bezug auf die erfindungsgemäße Anzeige- und Bedienvorrichtung vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung einen vorderen Bereich eines Innenraums eines Kraftfahrzeugs mit einer Anzeige- und Bedienvorrichtung gemäß einer Ausführungsform der Erfindung;
- Fig. 2: ein Blockdiagramm einer Anzeige- und Bedienvorrichtung gemäß einer Ausführungsform der Erfindung;
- Fig. 3: in schematischer Darstellung eine Anzeigeeinrichtung mit dargestellten graphischen Objekten, die jeweils einer Applikation zugeordnet sind und durch den Benutzer ausgewählt werden können;
- Fig. 4 und 5: jeweils ein ausgewähltes Objekt;
- Fig. 6: in schematischer Darstellung die Anzeigeeinrichtung, wobei ein Verfahren gemäß einer Ausführungsform der Erfindung näher erläutert wird; und
- Fig. 7 bis 10: in schematischer Darstellung die Anzeigeeinrichtung, wobei ein Verfahren gemäß einer weiteren Ausführungsform näher erläutert wird.

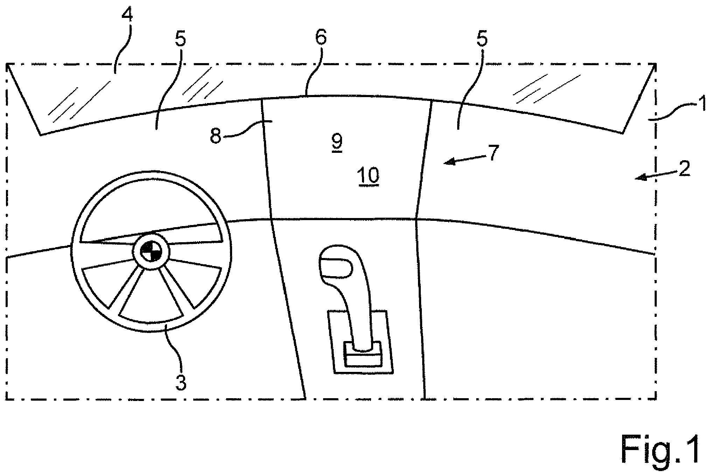

Bezug nehmend auf Fig. 1 beinhaltet ein als Personenkraftwagen ausgebildetes Kraftfahrzeug 1 einen Innenraum 2, dessen Frontbereich in Fig. 1 schematisch dargestellt ist. Auf einer Fahrerseite befindet sich in an sich bekannter Weise ein Lenkrad 3, welches zwischen einer Windschutzscheibe 4 und einem nicht dargestellten Fahrersitz angeordnet ist und zur Lenkung der vorderen Räder des Kraftfahrzeugs 1 dient. Zwischen der Windschutzscheibe 4 einerseits und dem Lenkrad 3 andererseits ist ein Armaturenbrett 5 angeordnet, das sich in Fahrzeugquerrichtung über die gesamte Breite des Innenraums 2 erstreckt und zu welchem eine Mittelkonsole 6 gehört. Die Mittelkonsole 6 befindet sich mittig zwischen dem Fahrersitz und dem Beifahrersitz.

Zur Steuerung unterschiedlicher Funktionsgeräte bzw. -einrichtungen des Kraftfahrzeugs 1 und/oder zum Abrufen verschiedenster, auch Internet-basierter Applikationen ist eine Anzeige- und Bedienvorrichtung 7 vorgesehen, welche eine Anzeigeeinrichtung 8 mit einer beispielsweise durch eine berührungssensitive Anzeigefläche 9 der Anzeigeeinrichtung 8 gebildeten Eingabeeinrichtung 10 sowie eine in Fig. 1 nicht näher dargestellte elektronische Steuereinrichtung umfasst. Die Steuereinrichtung kann beispielsweise einen digitalen Signalprozessor und/oder einen Mikrocontroller umfassen, wie auch einen Datenspeicher.

Prinzipiell kann die Anzeigeeinrichtung 8 in Form eines herkömmlichen zweidimensionalen Displays, beispielsweise eines LCD-Displays, bereitgestellt sein, wie es bei heutigen Kraftfahrzeugen üblicherweise in die Mittelkonsole 6 integriert wird. Bevorzugt wird jedoch eine dreidimensionale Anzeigeeinrichtung 8 eingesetzt, die durch verschiedenste visuelle Effekte eine räumliche Tiefe vortäuschen kann und somit dreidimensionale Bilder anzeigen kann. Die Anzeigeeinrichtung 8 kann beispielsweise ein stereoskopisches Display sein. Die Anzeigeeinrichtung 8 kann dabei in die Mittelkonsole 6 integriert sein, wie dies in Fig. 1 schematisch angedeutet ist. Alternativ kann jedoch auch vorgesehen sein, dass die Anzeigeeinrichtung 8 oder eine weitere Anzeigeeinrichtung in Fahrtrichtung auf der linken Seite der Mittelkonsole 6 angeordnet und hierbei beispielsweise in ein Kombiinstrument integriert ist. Optional kann die Anzeigeeinrichtung 8 auch als ein Head-Up-Display ausgebildet sein.

Die Anzeigeeinrichtung 8 ist im Kraftfahrzeug 1 ortsfest und somit unlösbar angeordnet.

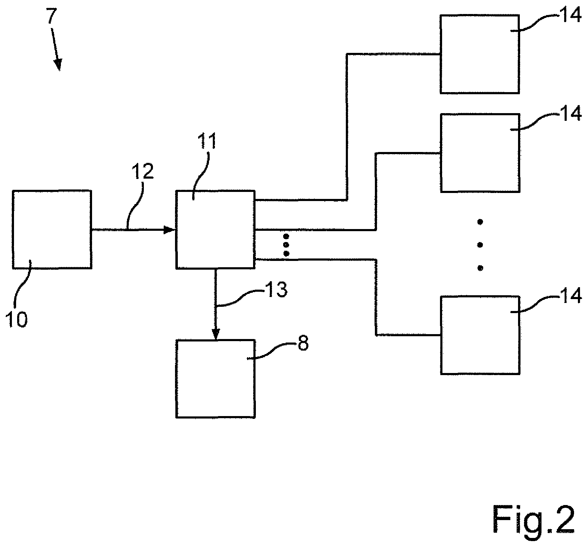

In Fig. 2 ist ein Blockdiagramm der Anzeige- und Bedienvorrichtung 7 dargestellt. Die Eingabeeinrichtung 10 ist mit der Steuereinrichtung gekoppelt, welche nun mit 11 bezeichnet ist. Die Steuereinrichtung 11 empfängt Eingaben 12, welche ein Benutzer an der Eingabeeinrichtung 10 vornimmt, etwa durch Berühren der berührungssensitiven Anzeigefläche 9 der Anzeigeeinrichtung 8. Außerdem steuert die Steuereinrichtung 11 die Anzeigeeinrichtung 8 unter Ausgabe entsprechender Steuersignale 13 an. Des Weiteren ist die Steuereinrichtung 11 mit einer Vielzahl von elektronischen Funktionsgeräten 14 des Kraftfahrzeugs 1 gekoppelt, welche beispielsweise ein Navigationsgerät, eine Audioanlage, eine Telefonanlage, einen Bordcomputer, eine (Sitz-)Heizung, ein Radiogerät, eine Kommunikationseinrichtung zur Kommunikation mit Internet und dergleichen umfassen können.

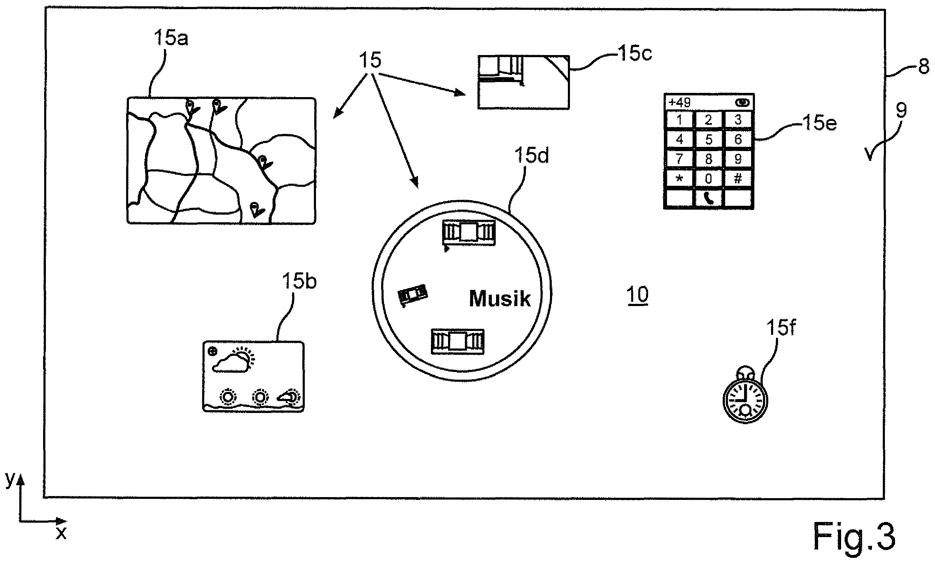

Fig. 3 zeigt nun die Anzeigefläche 9 der Anzeigeeinrichtung 8 gemäß einem Ausführungsbeispiel. Auf der Anzeigeeinrichtung 8 können auswählbare graphische Objekte 15 angezeigt werden, die insgesamt ein Menü bilden. Unter einem Objekt 15 wird dabei insbesondere ein Menüeintrag verstanden, welcher durch den Benutzer unter Verwendung der Eingabeeinrichtung 10 einzeln ausgewählt werden kann, um eine dem ausgewählten Objekt 15 zugeordnete Funktionalität bereitzustellen bzw. eine dem ausgewählten Objekt 15 zugeordnete Applikation zu aktivieren. Die Objekte 15 sind also jeweils einer Applikation bzw. Anwendung zugeordnet. Jedes Objekt 15 ist dabei einem Funktionsgerät 14 des Kraftfahrzeugs 1 zugeordnet. So ist beispielsweise ein Objekt 15a dem Navigationsgerät zugeordnet, sodass nach Auswahl des Objekts 15a das Navigationsgerät gesteuert werden kann bzw. navigationsbezogene Informationen angezeigt werden können. Des Weiteren ist ein Objekt 15b der genannten Kommunikationseinrichtung zugeordnet, welche an das Internet angebunden ist und mit verschiedenen Internet-Servern kommuniziert. Nach Auswahl des Objekts 15b werden beispielsweise Wetterinformationen angezeigt. Nach Auswahl eines weiteren Objekts 15c wird beispielsweise eine Suchmaschine aktiviert, d.h. ein Programm zur Durchführung einer Recherche von Dokumenten im Internet. Wird ein noch weiteres Objekt 15d ausgewählt, so wird eine Applikation gestartet, mittels welcher eine Audioanlage des Kraftfahrzeugs 1 gesteuert werden kann. Nach Auswahl eines noch weiteren Objekts 15e kann eine Telefonanlage des Kraftfahrzeugs 1 gesteuert werden. Ein noch weiteres Objekt 15f zeigt die aktuelle Uhrzeit an.

Insgesamt können die Objekte 15 bzw. die dahinter stehenden Applikationen in zwei Gruppen unterteilt werden, nämlich in Anwendungsobjekte einerseits, welche Applikationen zugeordnet sind, bei denen eine Interaktion mit dem Benutzer erfolgen kann, sowie in Informationsobjekte andererseits, die Applikationen zugeordnet sind, bei denen lediglich Informationen ausgegeben werden, ohne dass eine Interaktion mit dem Benutzer erfolgt. Zu Anwendungsobjekten gehören beispielsweise die Objekte 15a, 15c, 15d und 15e, während die Informationsobjekte folgende Objekte beinhalten: 15b und 15f.

Die Steuereinrichtung 11 ist so eingerichtet, dass nach Auswahl eines der Objekte 15 durch den Benutzer - beispielsweise durch Berühren der berührungssensitiven Anzeigefläche 9 mit einem Finger an der Stelle des gewünschten Objekts 15 - das ausgewählte Objekt 15 kontinuierlich vergrößert wird, sodass quasi eine egozentrische Animation zu dem ausgewählten Objekt 15 stattfindet. Dieses ausgewählte Objekt 15 rückt dann in einen Mittelpunkt bzw. in ein Zentrum der Anzeigefläche 9. Mit anderen Worten wird ein semantischer Zoom des ausgewählten Objekts 15 durchgeführt.

Jedes Objekt 15 ist dabei durch eine graphische Benutzeroberfläche der jeweiligen Applikation gebildet. Nach Auswahl eines der Objekte 15 wird dieses Objekt 15 so vergrößert, dass seine Benutzeroberfläche im Detail sichtbar wird und alle Einzelheiten bzw. Details der graphischen Benutzeroberfläche durch den Benutzer erkannt werden können.

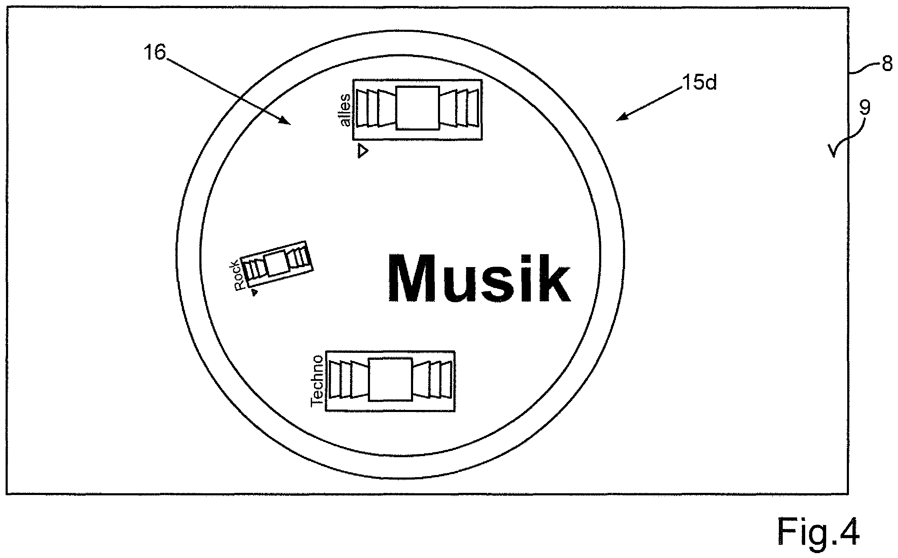

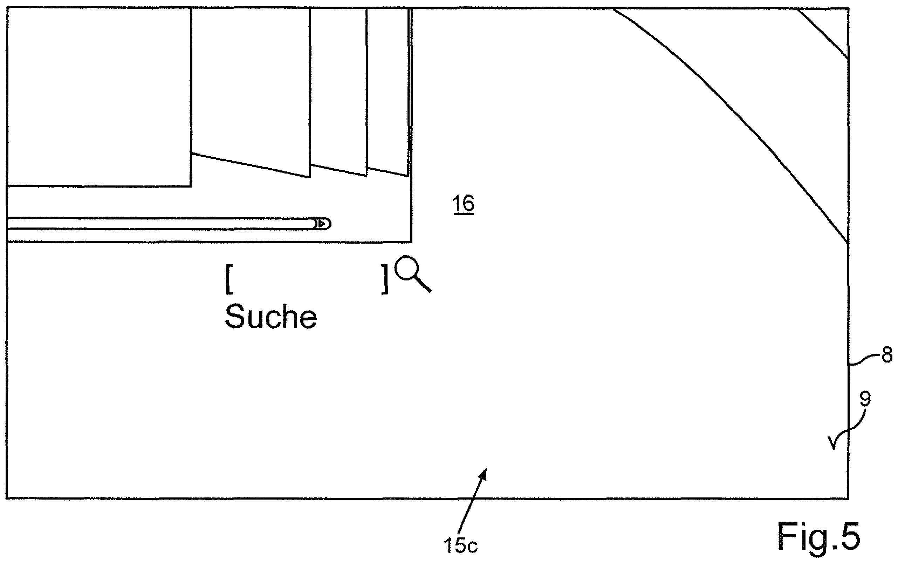

Fig. 4 zeigt dabei ein Beispiel, in welchem das Objekt 15d ausgewählt wurde und somit zentral auf der Anzeigeeinrichtung 8 dargestellt ist. Wie aus Fig. 4 hervorgeht, beinhaltet das ausgewählte Objekt 15d eine graphische Benutzeroberfläche 16, welche im vorliegenden Ausführungsbeispiel durch ein Untermenü gebildet wird, bei welchem verschiedene Musikarten ausgewählt werden können. Ein weiteres Beispiel ist in Fig. 5 gezeigt. Hier wurde das Objekt 15c und somit die Suchmaschine ausgewählt, welche zum Durchführen einer Internet-Recherche dient. Der Benutzer kann nun eine entsprechende Eingabe vornehmen und den gewünschten Suchbegriff eingeben.

Jeder Applikation bzw. jedem Objekt 15 wird ein Prioritätswert zugeordnet. Als Prioritätswert wird dabei ein Zählerwert definiert, mittels welchem die Anzahl der Aufrufe der jeweiligen Applikation bzw. die Anzahl der Auswahlvorgänge des jeweiligen Objekts 15 in der Steuereinrichtung 11 gezählt wird. Zu jedem Objekt 15 ist somit eindeutig bekannt, wie häufig dieses Objekt 15 durch den Benutzer bisher ausgewählt worden ist. In Abhängigkeit von dem jeweiligen Prioritätswert wird dann die Größe der Objekte 15 auf der Anzeigeeinrichtung 8 und/oder die jeweilige Position der Objekte 15 einzeln eingestellt. Ist die Anzeigeeinrichtung 8 als dreidimensionales Display ausgebildet, so wird abhängig von dem jeweiligen Prioritätswert auch die Position der Objekte 15 in Tiefenrichtung der Anzeigeeinrichtung 8 eingestellt, d.h. in Richtung senkrecht zur Anzeigefläche 9. Dies kann beispielsweise so aussehen, dass die Objekte 15 mit relativ hohen Prioritätswerten größer als andere Objekte 15 angezeigt werden, sodass die Größe proportional zu dem jeweiligen Prioritätswert eingestellt wird. Des Weiteren kann vorgesehen sein, dass diejenigen Objekte 15, die über einen höheren Prioritätswert verfügen, in Tiefenrichtung der Anzeigeeinrichtung 8 an vorderster Stelle und somit weniger tief als die anderen Objekte 15 positioniert werden. Abhängig von dem Prioritätswert kann auch die Position der Objekte 15 in Längsrichtung und in Querrichtung, d.h. in x-Richtung und y-Richtung (vgl. Fig. 3) der Anzeigefläche 9 eingestellt werden. Beispielsweise kann das Objekt 15 mit dem höheren Prioritätswert in einem zentralen Bereich der Anzeigefläche 9 dargestellt werden, wie dies bei dem Objekt 15d in Fig. 3 der Fall ist.

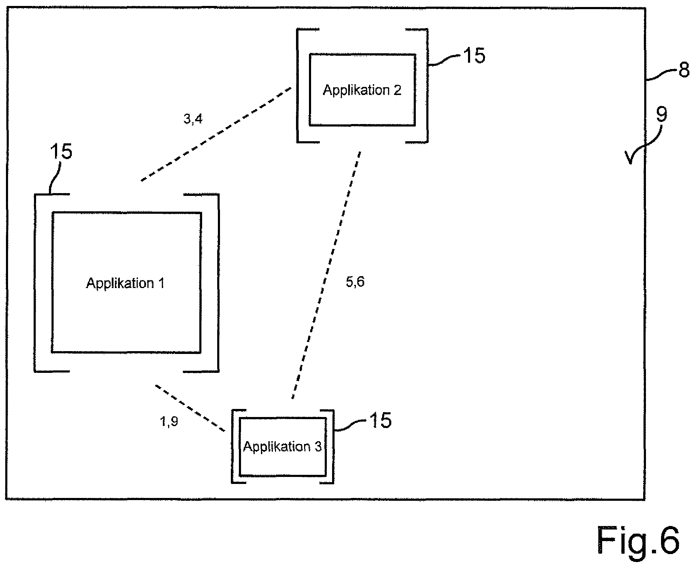

Zur genauen Einstellung der Positionen der einzelnen Objekte 15 bzw. zur Einstellung der Abstände zwischen jeweils zwei Objekten 15 kann eine Häufigkeitsmatrix definiert werden, welche für jedes mögliche Objektpaar jeweils aus zwei Objekten 15 die Häufigkeit angibt, mit welcher die beiden Objekte 15 des jeweiligen Objektpaares unmittelbar nacheinander ausgewählt wurden. Für drei Objekte 15, wie sie beispielhaft in Fig. 6 gezeigt sind, kann eine derartige Häufigkeitsmatrix beispielsweise folgendermaßen aussehen:

| | Applikation 1 | Applikation 2 | Applikation 3 |
|---|---|---|---|
| Applikation 1 | x | 5 | 1 |
| Applikation 2 | 0 | X | 3 |
| Applikation 3 | 8 | 0 | x |

Wie aus der obigen Matrix hervorgeht, wird für jedes Objektpaar jeweils aus zwei Objekten 15 ein Zählerwert definiert, mittels welchem die Anzahl von Auswahlvorgängen gezählt wird, bei denen die beiden Objekte 15 in einer bestimmten Reihenfolge unmittelbar nacheinander ausgewählt werden. In dem obigen Beispiel wurde beispielsweise die Applikation 1 achtmal direkt hinter der Applikation 3 ausgewählt, wobei es noch niemals vorgekommen ist, dass die Applikation 1 direkt nach der Applikation 2 ausgewählt wurde. Die Applikation 2 wurde fünfmal nach der Applikation 1 und kein einziges Mal nach der Applikation 3 ausgewählt. Entsprechend wurde die Applikation 3 einmal direkt nach der Applikation 1 und dreimal unmittelbar nach der Applikation 2 ausgewählt.

In Abhängigkeit von den Zählerwerten, welche die Matrixkomponenten der Häufigkeitsmatrix darstellen, werden nun die Abstände zwischen den in Fig. 6 schematisch dargestellten Objekten 15 bestimmt, die im Betrieb eingestellt werden sollen. Für die Bestimmung der Abstände wird zunächst die Gesamtsumme von allen Zählerwerten bzw. Matrixkomponenten der Häufigkeitsmatrix bestimmt. Im vorliegenden Beispiel beträgt die Gesamtsumme 17. Für jedes Objektpaar wird dann die Summe der beiden Zählerwerte bestimmt, welche die Häufigkeit der Auswahl der beiden Objekte 15 unmittelbar nacheinander in die eine bzw. in die andere Richtung angeben. Für das Objektpaar aus der Applikation 1 und der Applikation 2 wird somit folgende Summe bestimmt: 5 + 0 = 5. Für das Objektpaar aus der Applikation 1 und Applikation 3 wird folgende Summe bestimmt: 1 + 8 = 9. Entsprechend wird für das Objektpaar aus der Applikation 2 und der Applikation 3 folgende Summe bestimmt: 3 + 0 = 3. Für die Bestimmung des Abstands zwischen zwei Objekten 15 eines jeden Objektpaares wird dann die Gesamtsumme aller Zählerwerte (hier 17) durch die Summe der beiden einschlägigen Zählerwerte dividiert:
Abstand zwischen Applikation 1 und Applikation 2 = 17/(5+0) = 3,4;
Abstand zwischen Applikation 1 und Applikation 3 = 17/(1+8) = 1,9; und
Abstand zwischen Applikation 2 und Applikation 3 = 17/(3+0) = 5,6.

Diese Abstände werden dann auf der Anzeigeeinrichtung 8 eingestellt, wie dies schematisch in Fig. 6 angedeutet ist.

Bei der Einstellung der Größe und/oder der Anordnung der Objekte 15 untereinander kann auch eine Häufigkeit berücksichtigt werden, mit welcher der Benutzer - insbesondere der Fahrer des Kraftfahrzeugs 1 - seinen Blick auf das jeweilige Objekt 15 richtet, ohne dass dieses Objekt 15 tatsächlich ausgewählt wird. Dazu kann die Anzeige-und Bedienvorrichtung 7 eine in den Figuren nicht näher dargestellte Blickerkennungseinrichtung beinhalten, mittels welcher die aktuelle Blickrichtung des Benutzers detektiert wird. Der oben genannte Prioritätswert kann für jedes Objekt 15 auch unter Berücksichtigung der Häufigkeit bestimmt werden, mit welcher der Benutzer seinen Blick auf das jeweilige Objekt richtet.

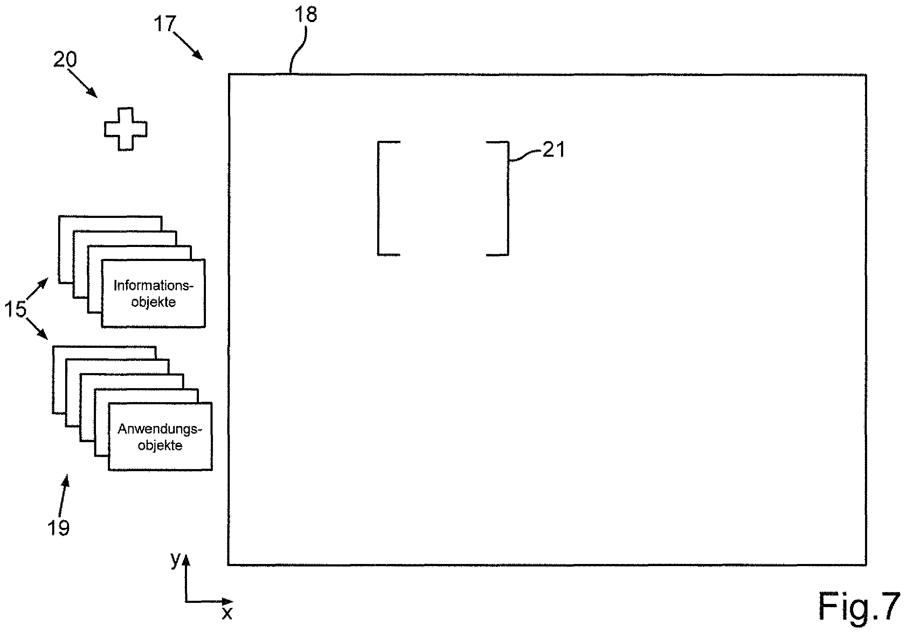

Die Anzeige- und Bedienvorrichtung 7 kann optional auch von einem Betriebsmodus, in welchem der Benutzer eines der angezeigten Objekte 15 auswählen und die Funktionsgeräte 14 des Kraftfahrzeugs 1 steuern kann, in einen Konfigurationsmodus umgeschaltet werden, in welchem der Benutzer die anzuzeigenden Objekte 15 sowie die Größe der einzelnen Objekte 15 sowie deren Anordnung untereinander selbst definieren kann. Ein derartiger Konfigurationsmodus wird nachfolgend unter Bezugnahme auf die Fig. 7 bis 10 näher erläutert.

Wird der Konfigurationsmodus aktiviert, so kann auf der Anzeigeeinrichtung 8 eine Benutzeroberfläche 17 angezeigt werden, wie sie in Fig. 7 schematisch dargestellt ist. Diese Benutzeroberfläche 17 beinhaltet ein in Form eines Rechtecks bereitgestelltes virtuelles Display 18 sowie eine neben dem virtuellen Display 18 bereitgestellte Objektbibliothek 19 mit vorgegebenen bzw. abgelegten Objekten 15, welche in Informationsobjekte einerseits sowie Anwendungsobjekte andererseits unterteilt sind. Des Weiteren befindet sich in der Benutzeroberfläche 17 eine mit "+" bezeichnete Schaltfläche 20, welche immer dann betätigt werden kann, wenn ein neues Objekt 15 durch den Benutzer hinzugefügt werden sollte.

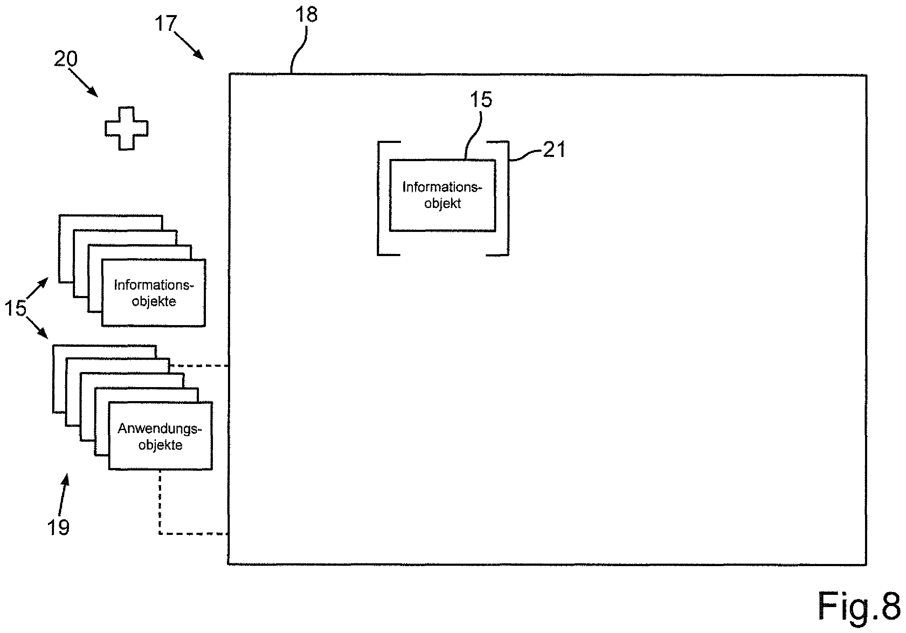

Mit weiterem Bezug auf Fig. 7 betätigt der Benutzer die Schaltfläche 20, wodurch in dem virtuellen Display 18 ein Rahmen 21 eingeblendet bzw. angezeigt wird, welcher die zukünftige Position eines auszuwählenden neuen Objekts 15 definiert. Durch "Ziehen und Ablegen" ("drag and drop") kann die Position des Rahmens 21 in x-Richtung sowie in y-Richtung der Anzeigeeinrichtung 8 bzw. des virtuellen Displays 18 sowie optional auch in Tiefenrichtung beliebig durch den Benutzer definiert werden. Durch entsprechende Eingabe an der berührungssensitiven Anzeigefläche 9 - etwa durch entsprechende Gesten mit einem oder mehreren Fingern - kann der Benutzer auch die Größe des Rahmens 21 selbst definieren. Durch "Ziehen und Ablegen" kann der Benutzer in einem weiteren Schritt eines der Objekte 15 aus der Objektbibliothek 19 in den Rahmen 21 verschieben, wobei die Größe des ausgewählten Objekts an die Größe des Rahmens 21 angepasst wird. Ein solchermaßen neu definiertes Objekt 15 ist in Fig. 8 schematisch dargestellt.

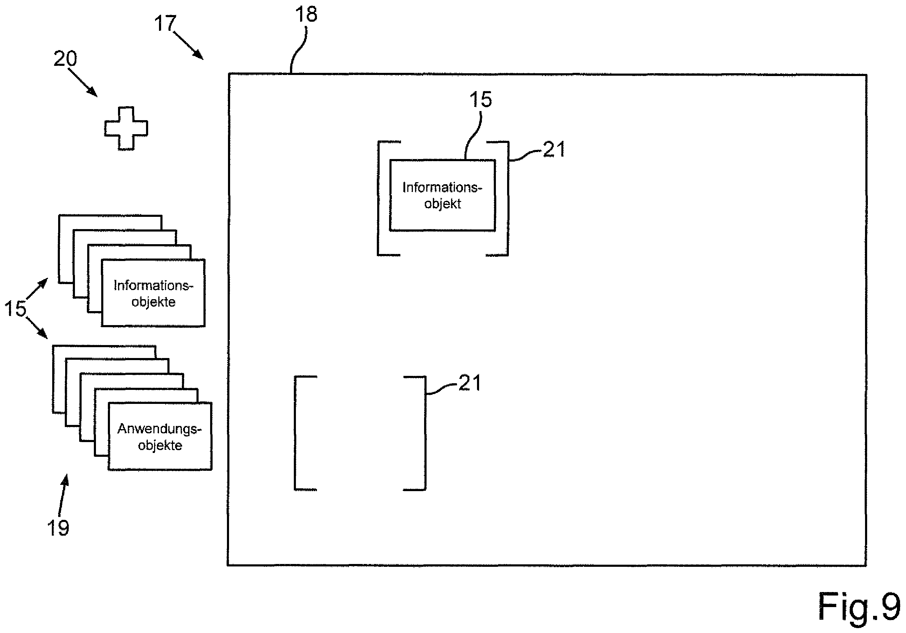

Ausgehend von der Situation gemäß Fig. 8 kann der Benutzer auch einen weiteren Rahmen 21 hinzufügen, wie dies in Fig. 9 gezeigt ist. Auch hier kann die Größe und Position des Rahmens 21 beliebig definiert werden. Um den neuen Rahmen 21 mit einem Objekt 15 zu versehen, kann eines der abgelegten Objekte 15 aus der Objektbibliothek 19 in den Rahmen 21 verschoben werden.

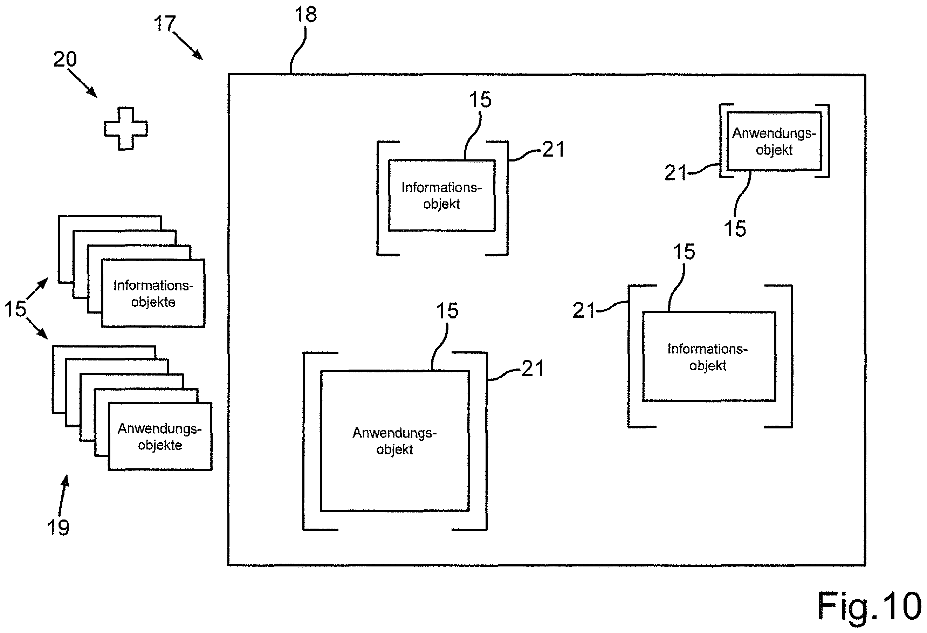

Ein Beispiel mit insgesamt vier Objekten 15 ist in Fig. 10 schematisch gezeigt. Der Benutzer kann nun den Konfigurationsmodus beenden, sodass die Anzeige- und Bedienvorrichtung 7 wieder in den Betriebsmodus geschaltet wird, in welchem die neuen Objekte 15 mit der vom Benutzer selbst definierten Größe und Anordnung angezeigt werden.

Es kann dabei vorgesehen sein, dass die Größe und/oder die Anordnung der Objekte 15 so lange automatisch bzw. adaptiv mittels der Steuereinrichtung 11 anhand der Prioritätswerte eingestellt wird, bis der Benutzer die Größe und/oder die Anordnung in dem Konfigurationsmodus selbst definiert. Nach einer benutzerdefinierten Einstellung der Größe und/oder der Anordnung kann die automatische Einstellung unterbleiben. Diese kann beispielsweise wieder dann erfolgen, wenn ein anderer Benutzer - beispielsweise ein anderer Fahrer - detektiert wird.

## Patentansprüche

1. Kraftfahrzeug (1) mit einer Anzeige- und Bedienvorrichtung (7), welche umfasst:
- eine Anzeigeeinrichtung (8) zum Anzeigen von auswählbaren graphischen Objekten (15), wobei die graphischen Objekte (15) jeweils durch eine graphische Benutzeroberfläche (16) einer dem jeweiligen Objekt (15) zugeordneten Applikation gebildet sind,
- eine Eingabeeinrichtung (10) zum Empfangen von Eingaben (12) eines Benutzers, über welche eines der angezeigten Objekte (15) auswählbar ist, und
- eine Steuereinrichtung (11) zum Ansteuern der Anzeigeeinrichtung (8) abhängig von den empfangenen Eingaben (12), wobei
die Steuereinrichtung (11) dazu ausgelegt ist, den angezeigten Objekten (15) jeweils einen Prioritätswert abhängig von den empfangenen Eingaben (12) zuzuordnen und abhängig von den Prioritätswerten eine Größe der jeweiligen Objekte (15) und/oder eine Anordnung der angezeigten Objekte (15) untereinander im Betrieb der Anzeige- und Bedienvorrichtung (7) einzustellen, und wobei zum Auswählen eines der angezeigten Objekte (15) die Eingabeeinrichtung (10) eine Spracheingabeeinheit umfasst, welche zum Empfangen von Sprachbefehlen des Benutzers ausgebildet ist, sodass die auf der Anzeigeeinrichtung (8) angezeigten Objekte (15) mittels Spracheingabe auswählbar sind, und
die Steuereinrichtung (11) dazu ausgelegt ist, nach Auswahl eines der angezeigten Objekte (15) selbiges Objekt (15) zu vergrößern, bis das ausgewählte Objekt (15) zumindest einen überwiegenden Flächenbereich einer Anzeigefläche (9) der Anzeigeeinrichtung (8) einnimmt, und
ergänzend die Eingabeeinrichtung zumindest eine berührungssensitive Oberfläche aufweist und eine Auswahl der Objekte durch Berühren der berührungssensitiven Oberfläche vorgenommen wird und
nach Auswahl des Objekts die zugeordnete Applikation aktiviert und eine graphische Benutzeroberfläche dieser Applikation angezeigt wird.

2. Kraftfahrzeug (1) nach Anspruch 1, wobei die Steuereinrichtung (11) dazu ausgelegt ist, zu den Objekten (15) jeweils eine Häufigkeit der Auswahl des jeweiligen Objekts (15) zu bestimmen und die Prioritätswerte in Abhängigkeit von der jeweiligen Häufigkeit zu bestimmen.

3. Kraftfahrzeug (1) nach Anspruch 1 oder 2, wobei zu den Objekten (15) jeweils ein Zählerwert als Prioritätswert definiert ist und die Steuereinrichtung (11) dazu ausgelegt ist, bei der Auswahl eines der Objekte (15) den diesem Objekt (15) zugeordneten Zählerwert zu erhöhen.

4. Kraftfahrzeug (1) nach einem der vorhergehenden Ansprüche, wobei die Steuereinrichtung (11) dazu ausgelegt ist, das Objekt (15) mit dem höchsten Prioritätswert auf der Anzeigeeinrichtung (8) größer als alle anderen Objekte (15) anzuzeigen.

5. Kraftfahrzeug (1) nach einem der vorhergehenden Ansprüche, wobei die Steuereinrichtung (11) dazu ausgelegt ist, das Objekt (15) mit dem höchsten Prioritätswert in einem zentralen Bereich auf der Anzeigeeinrichtung (8) anzuzeigen.

6. Kraftfahrzeug (1) nach einem der vorhergehenden Ansprüche, wobei die Anzeige- und Bedienvorrichtung (7) eine Blickerkennungseinrichtung aufweist, welche zum Erfassen einer Blickrichtung des Benutzers ausgebildet ist, wobei die Steuereinrichtung (11) dazu ausgelegt ist, zu den Objekten (15) jeweils eine Häufigkeit zu bestimmen, mit welcher der Benutzer seinen Blick auf das jeweilige Objekt (15) richtet, und die Prioritätswerte in Abhängigkeit von der jeweiligen Häufigkeit zu bestimmen.

7. Kraftfahrzeug (1) nach einem der vorhergehenden Ansprüche, wobei die Anzeigeeinrichtung (8) zum dreidimensionalen Darstellen der graphischen Objekte (15) ausgebildet ist, wobei insbesondere die Steuereinrichtung (11) dazu ausgelegt ist, die Position der Objekte (15) in Tiefenrichtung der Anzeigeeinrichtung (8) abhängig von dem jeweiligen Prioritätswert einzustellen.

8. Kraftfahrzeug (1) nach einem der vorhergehenden Ansprüche, wobei die Steuereinrichtung (11) dazu ausgelegt ist, zu zumindest einem Objektpaar aus einem ersten Objekt (15) und einem zweiten Objekt (15) eine Häufigkeit der Auswahl dieser Objekte (15) unmittelbar nacheinander zu bestimmen und abhängig von dieser Häufigkeit einen Abstand zwischen dem ersten und dem zweiten Objekt (15) auf der Anzeigeeinrichtung (8) einzustellen.

9. Kraftfahrzeug (1) nach einem der vorhergehenden Ansprüche, wobei die Anzeige- und Bedienvorrichtung (7) einen von einem Betriebsmodus verschiedenen Konfigurationsmodus aufweist, in welchem mittels der Eingabeeinrichtung (10) die Größe der einzelnen angezeigten Objekte (15) und/oder die Anordnung der angezeigten Objekte (15) untereinander benutzerdefiniert einstellbar ist.

10. Kraftfahrzeug (1) nach einem der vorhergehenden Ansprüche, wobei die Anzeige- und Bedienvorrichtung (7) einen von einem Betriebsmodus verschiedenen Konfigurationsmodus aufweist, in welchem mittels der Eingabeeinrichtung (10) die auf der Anzeigeeinrichtung (8) anzuzeigenden Objekte (15) aus einer Objektbibliothek (19), insbesondere durch Ziehen und Ablegen, auswählbar sind.

11. Kraftfahrzeug (1) nach einem der vorhergehenden Ansprüche, wobei die Steuereinrichtung (11) dazu ausgelegt ist, nach Auswahl des angezeigten Objekts (15) selbiges Objekt (15) fortlaufend zu vergrößern.

12. Verfahren zum Betreiben einer Anzeige- und Bedienvorrichtung (7) eines Kraftfahrzeugs (1), bei welchem mittels einer Anzeigeeinrichtung (8) auswählbare graphische Objekte (15) angezeigt werden, wobei die graphischen Objekte (15) jeweils durch eine graphische Benutzeroberfläche (16) einer dem jeweiligen Objekt (15) zugeordneten Applikation gebildet sind, mittels einer Eingabeeinrichtung (10) Eingaben (12) eines Benutzers empfangen werden, über welche eines der angezeigten Objekte (15) ausgewählt wird, und mittels einer Steuereinrichtung (11) die Anzeigeeinrichtung (8) abhängig von den empfangenen Eingaben (12) angesteuert wird, wobei
die Steuereinrichtung (11) abhängig von den empfangenen Eingaben (12) eine Größe der einzelnen angezeigten Objekte (15) und/oder eine Anordnung der angezeigten Objekte (15) untereinander im Betrieb der Anzeige- und Bedienvorrichtung (7) einstellt, wobei die Steuereinrichtung (11) den angezeigten Objekten (15) jeweils einen Prioritätswert abhängig von den Eingaben (12) zuordnet und abhängig von den Prioritätswerten die Größe der jeweiligen Objekte (15) und/oder die Anordnung der angezeigten Objekte (15) untereinander einstellt, und wobei zum Auswählen eines der angezeigten Objekte (15) die Eingabeeinrichtung (10) eine Spracheingabeeinheit umfasst, welche zum Empfangen von Sprachbefehlen des Benutzers ausgebildet ist, sodass die auf der Anzeigeeinrichtung (8) angezeigten Objekte (15) mittels Spracheingabe auswählbar sind, und
die Steuereinrichtung (11) nach Auswahl eines der angezeigten Objekte (15) selbiges Objekt (15) vergrößert, bis das ausgewählte Objekt (15) zumindest einen überwiegenden Flächenbereich einer Anzeigefläche (9) der Anzeigeeinrichtung (8) einnimmt, und
ergänzend die Eingabeeinrichtung zumindest eine berührungssensitive Oberfläche aufweist und eine Auswahl der Objekte durch Berühren der berührungssensitiven Oberfläche vorgenommen wird und
nach Auswahl des Objekts die zugeordnete Applikation aktiviert und eine graphische Benutzeroberfläche dieser Applikation angezeigt wird.

## Claims

1. A motor vehicle (1) having a display and operating device (7) comprising:
- a display apparatus (8) for displaying selectable graphical objects (15), wherein the graphical objects (15) are each formed by a graphical user interface (16) of an application associated with the particular object (15),
- an input apparatus (10) for receiving inputs (12) of a user, via which one of the displayed objects (15) can be selected, and
- a control apparatus (11) for activating the display apparatus (8) depending on the inputs (12) received, wherein
the control apparatus (11) is configured to assign a priority value to each of the displayed objects (15) depending on the received inputs (12) and, depending on the priority values, to adjust a size of the particular objects (15) and/or an arrangement of the displayed objects (15) among each other during operation of the display and operating device (7),
and wherein
for selection of one of the displayed objects (15), the input apparatus (10) comprises a voice input unit, which is designed to receive voice commands of the user so that the objects (15) displayed on the display apparatus (8) are selectable by means of voice input, and the control apparatus (11) is configured, following selection of one of the displayed objects (15), to enlarge said object (15) until the selected object (15) occupies at least a majority of a display area (9) of the display apparatus (8), and
in addition the input apparatus has at least one touch-sensitive surface and a selection of the objects is made by touching the touch-sensitive surface, and
following selection of the object, the associated application is activated and a graphical user interface of this application is displayed.

2. A motor vehicle (1) according to claim 1,
wherein
the control apparatus (11) is configured, for each of the objects (15), to determine a frequency of the selection of the particular object (15) and to determine the priority values depending on the particular frequency.

3. A motor vehicle (1) according to claim 1 or 2,
wherein
a counter value is defined as priority value for each of the objects (15) and the control apparatus (11) is configured, when selecting one of the objects (15), to increase the counter value associated with this object (15).

4. A motor vehicle (1) according to one of the preceding claims,
wherein
the control apparatus (11) is configured to display the object (15) having the highest priority value larger than all other objects (15) on the display apparatus (8).

5. A motor vehicle (1) according to one of the preceding claims,
wherein
the control apparatus (11) is configured to display the object (15) having the highest priority value in a central region on the display apparatus (8).

6. A motor vehicle (1) according to one of the preceding claims,
wherein
the display and operating device (7) has a view detection apparatus which is designed to detect a viewing direction of the user, wherein the control apparatus (11) is configured to determine, for each of the objects (15), a frequency with which the user directs his/her gaze to the particular object (15) and to determine the priority values depending on the particular frequency.

7. A motor vehicle (1) according to one of the preceding claims,
wherein
the display apparatus (8) is designed for three-dimensional representation of the graphical objects (15), wherein in particular the control apparatus (11) is designed to adjust the position of the objects (15) in the depth direction of the display apparatus (8) depending on the particular priority value.

8. A motor vehicle (1) according to one of the preceding claims,
wherein
the control apparatus (11) is configured to determine, for at least one object pair formed of a first object (15) and a second object (15), a frequency of the selection of these objects (15) directly one after the other and to adjust a distance between the first and the second object (15) on the display apparatus (8) depending on this frequency.

9. A motor vehicle (1) according to one of the preceding claims,
wherein
the display and operating device (7) has a configuration mode different from an operating mode, in which configuration mode the size of the individual displayed objects (15) and/or the arrangement of the displayed objects (15) among each other is adjustable in a user-defined manner by means of the input apparatus (10).

10. A motor vehicle (1) according to one of the preceding claims,
wherein
the display and operating device (7) has a configuration mode different from an operating mode, in which configuration mode the objects (15) to be displayed on the display apparatus (8) can be selected from an object library (19) by means of the input apparatus (10), in particular by dragging and dropping.

11. A motor vehicle (1) according to one of the preceding claims,
wherein
the control apparatus (11) is configured, following selection of the displayed object (15), to enlarge said object (15) continuously.

12. A method for operating a display and operating device (7) of a motor vehicle (1), in which method graphical objects (15) selectable by means of a display apparatus (8) are displayed, wherein the graphical objects (15) are each formed by a graphical user interface (16) of an application associated with the particular object (15), inputs (12) of a user, via which one of the displayed objects (15) is selected, are received by means of an input apparatus (10), and the display apparatus (8) is activated by means of a control apparatus (11), depending on the inputs (12) received,
wherein
the control apparatus (11), depending on the received inputs (12), adjusts a size of the individual displayed objects (15) and/or an arrangement of the displayed objects (15) among each other during operation of the display and operating device (7), wherein the control apparatus (11) assigns each of the displayed objects (15) a priority value depending on the inputs (12) and adjusts the size of the particular objects (15) and/or the arrangement of the displayed objects (15) among each other depending on the priority values, and wherein
for selection of one of the displayed objects (15), the input apparatus (10) comprises a voice input unit, which is designed to receive voice commands of the user so that the objects (15) displayed on the display apparatus (8) are selectable by means of voice input, and the control apparatus (11), following selection of one of the displayed objects (15), enlarges said object (15) until the selected object (15) occupies at least a majority of a display area (9) of the display apparatus (8), and
in addition the input apparatus has at least one touch-sensitive surface and a selection of the objects is made by touching the touch-sensitive surface, and
following selection of the object, the associated application is activated and a graphical user interface of this application is displayed.

## Revendications

1. Véhicule automobile (1) comprenant une installation d'affichage et de manœuvre (7) qui comporte :
- un dispositif d'affichage (8) permettant d'afficher des objets graphiques (15) pouvant être sélectionnés, ces objets graphiques (15) étant respectivement formés par une surface d'utilisateur graphique (16) d'une application associée à l'objet (15) respectif,
- un dispositif de saisie (10) permettant de recevoir des entrées (12) d'un utilisateur par l'intermédiaire desquelles l'un des objets (15) affichés peut être sélectionné, et
- un dispositif de commande (11) permettant de commander le dispositif d'affichage (8) en fonction des entrées (12) reçues,
le dispositif de commande (11) étant réalisé de façon à associer respectivement une valeur de priorité aux objets (15) affichés en fonction des entrées (12) reçues, et de régler en fonction des valeurs de priorité la grandeur des objets (15) respectifs et/ou la disposition des objets (15) affichés les uns par rapport aux autres lors du fonctionnement de l'installation d'affichage et de manœuvre (7), et
pour permettre de sélectionner l'un des objets (15) affichés, le dispositif de saisie (10) comprenant une unité de saisie vocale qui est réalisée pour permettre de recevoir des instructions vocales de l'utilisateur, de sorte que les objets (15) affichés sur le dispositif d'affichage (8) puissent être sélectionnés par des entrées vocales, et
le dispositif de commande (11) étant réalisé de façon à permettre après la sélection de l'un des objets (15) affichés, d'agrandir celui-ci jusqu'à ce que cet objet (15) sélectionné occupe au moins la majeure partie de la surface d'affichage (9) du dispositif d'affichage (8), et
en complément, le dispositif de saisie comprenant au moins une surface tactile, la sélection d'un objet étant effectuée par contact de la surface tactile, et
après la sélection de l'objet, l'application associée étant activée et une surface d'utilisateur graphique de cette application étant affichée.

2. Véhicule automobile (1) conforme à la revendication 1,
dans lequel le dispositif de commande (11) est réalisé pour déterminer pour chacun des objets (15) la fréquence de la sélection de cet objet (15), et déterminer respectivement les valeurs de priorité en fonction de la fréquence.

3. Véhicule automobile (1) conforme à la revendication 1 ou 2,
dans lequel pour chacun des objets (15) une valeur numérique est définie en tant que valeur de priorité et le dispositif de commande (11) est réalisé pour permettre d'augmenter, lors de la sélection de l'un des objets (15) la valeur numérique associée à cet objet (15).

4. Véhicule automobile (1) conforme à l'une des revendications précédentes,
dans lequel le dispositif de commande (11) est réalisé pour permettre d'afficher l'objet (15) ayant la valeur de priorité la plus élevée sur le dispositif d'affichage (8) de sorte qu'il soit plus grand que tous les autres objets (15).

5. Véhicule automobile (1) conforme à l'une des revendications précédentes,
dans lequel le dispositif de commande (11) est réalisé pour permettre d'afficher l'objet (15) ayant la valeur de priorité la plus élevée dans la zone centrale sur l'affichage (8).

6. Véhicule automobile (1) conforme à l'une des revendications précédentes,
dans lequel l'installation d'affichage et de manœuvre (7) comporte un dispositif de reconnaissance visuelle qui est réalisé pour permettre de détecter la direction de regard de l'utilisateur, le dispositif de commande (11) étant réalisé pour permettre de déterminer pour chacun des objets (15) la fréquence avec laquelle l'utilisateur dirige son regard sur cet objet (15) et de déterminer les valeurs de priorité en fonction des fréquences respectives.

7. Véhicule automobile (1) conforme à l'une des revendications précédentes,
dans lequel le dispositif d'affichage (8) est réalisé pour permettre une représentation tridimensionnelle des objets graphiques (15), et, en particulier, le dispositif de commande (11) est réalisé pour permettre de régler la position des objets (15) dans la direction de la profondeur du dispositif d'affichage (8) en fonction de leur valeur de priorité respective.

8. Véhicule automobile (1) conforme à l'une des revendications précédentes,
dans lequel le dispositif de commande (11) est réalisé pour permettre de déterminer directement, successivement, pour au moins une paire d'objets constituée d'un premier objet (15) et d'un second objet (15), la fréquence de la sélection de ces objets (15), et de régler en fonction de cette fréquence, la distance entre le premier objet et le second objet (15) sur le dispositif d'affichage (8).

9. Véhicule automobile (1) conforme à l'une des revendications précédentes,
dans lequel l'installation d'affichage et de manœuvre (7) comporte un mode de configuration différent du mode de fonctionnement dans lequel, au moyen du dispositif de saisie (10), la dimension individuelle des objets (15) affichés et/ou la disposition des objets (15) affichés les uns par rapport aux autres peut(peuvent) être réglée(s) de façon définie par l'utilisateur.

10. Véhicule automobile (1) conforme à l'une des revendications précédentes,
dans lequel l'installation d'affichage et de manœuvre (7) comprend un mode de configuration différent du mode de fonctionnement dans lequel, au moyen du dispositif de saisie (10), les objets (15) devant être affichés sur le dispositif d'affichage (8) peuvent être sélectionnés à partir d'une bibliothèque d'objets (19), en particulier par prélèvement et récupération.

11. Véhicule automobile (1) conforme à l'une des revendications précédentes,
dans lequel le dispositif de commande (11) est réalisé pour permettre d'agrandir continuellement l'objet (15) affiché après sa sélection.

12. Procédé permettant de faire fonctionner une installation d'affichage et de manœuvre (7) d'un véhicule automobile (1) selon lequel des objets graphiques (15) pouvant être sélectionnés sont affichés au moyen d'un dispositif d'affichage (8), ces objets graphiques (15) étant respectivement formés par une surface d'utilisateur graphique (16) d'une application associée à chaque objet (15), au moyen d'un dispositif de saisie (10), sont reçues des entrées (12) d'un utilisateur par l'intermédiaire desquelles l'un des objets (15) affiché est sélectionné, et, au moyen d'un dispositif de commande (11) le dispositif d'affichage (8) est commandé en fonction des données (12) reçues,
procédé selon lequel
le dispositif de commande (11) règle, en fonction des entrées (12) reçues la dimension individuelle des objets (15) affichés et/ou la disposition des objets (15) affichés les uns par rapport aux autres lors du fonctionnement de l'installation d'affichage et de manœuvre (7), le dispositif de commande (11) associant respectivement aux objets (15) affichés, une valeur de priorité en fonction des entrées (12), et réglant, en fonction des valeurs de priorité la dimension individuelle des objets (15) respectifs et/ou la disposition des objets (15) affichés les uns par rapport aux autres,
pour permettre de sélectionner l'un des objets (15) affichés, le dispositif de saisie (10) comprend une unité de saisie vocale qui est réalisée pour permettre de recevoir des instructions vocales de l'utilisateur, de sorte que les objets (15) affichés sur le dispositif d'affichage (8) puissent être sélectionnés par entrée vocale, et après la sélection de l'un des objets (15) affichés, le dispositif de commande (11) l'agrandit jusqu'à ce que cet objet (15) sélectionné occupe au moins la majeure partie de la surface d'affichage (9) du dispositif d'affichage (8),
en complément, le dispositif de saisie comporte au moins une surface tactile et la sélection d'un objet est effectuée par contact de la surface tactile, et
après la sélection de l'objet, l'application associée est activée et une surface d'utilisateur graphique de cette application est affichée.
